# EUROPÄISCHE PATENTSCHRIFT

(11) **EP 3 321 130 B1**
(45) Veröffentlichungstag und Bekanntmachung des Hinweises auf die Patenterteilung: **10.07.2019**
(21) Anmeldenummer: 17188983.5
(22) Anmeldetag: 01.09.2017
(51) Int. Cl.: B60R 1/00

(54) **VERFAHREN ZUR NACHFÜHRUNG EINES BILDAUSSCHNITTS**
METHOD FOR REPRODUCING A SECTION OF AN IMAGE
PROCÉDÉ DE MISE À JOUR D'UNE SECTION D'IMAGE

(30) Priorität: 07.09.2016 DE 102016216956
(43) Veröffentlichungstag der Anmeldung: 16.05.2018
(73) Patentinhaber: Continental Automotive GmbH, 30165 Hannover (DE)
(72) Erfinder: Weinlich, Andreas, 78048 Villingen-Schwenningen (DE)

(56) Entgegenhaltungen:
- EP-A1- 1 529 689
- EP-A1- 3 028 898
- DE-A1-102010 032 411
- JP-A- 2002 181 518

## Beschreibung

Die vorliegende Erfindung betrifft ein Verfahren zur Nachführung eines Bildausschnitts eines Kamerabildes der auf einem Monitor zum Ersatz eines Außenspiegels eines Fahrzeugs dargestellten wird, insbesondere bei Kurvenfahrt eines aus dem Fahrzeug und einem Anhänger bestehenden Gespanns.

Aus der WO 2016/024405 A2 ist ein Verfahren zur Nachführung eines auf einem Monitor zum Ersatz eines Außenspiegels eines Fahrzeugs dargestellten Bildausschnitts eines Kamerabildes eines aus dem Fahrzeug und einem Anhänger bestehenden Gespanns bei Kurvenfahrt bekannt. Dort wird ein Monitorsystem als Ersatz für einen Rückspiegel gezeigt bei dem der dargestellte Bildausschnitt der Bewegung der Kopfposition des Fahrers angepasst wird. Der Fahrer bewegt den Kopf, wenn der Anhänger bei Kurvenfahrt auf einem konventionellen Rückspiegel nach "außen" wandert, um das Ende des Anhängers weiterhin im Blick zu haben. Die Bewegung der Kopfposition des Fahrers wird dazu detektiert. Dazu ist eine zuverlässige Bewegungsdetektion erforderlich, was im Allgemeinen nur aufwendig realisierbar ist. Kopfbewegungen des Fahrers, die aus anderen Gründen als zur Änderung des für den Fahrer im herkömmlichen Rückspiegel sichtbaren Bildausschnitts erfolgen, führen zu unerwünschten Anpassungen des Bildausschnitts auf dem Monitor.

EP 3 028 898 A1 offenbart eine Steuerungseinheit nach dem Oberbegriff von Anspruch 12 und ein Verfahren nach dem Oberbegriff von Anspruch 1 zur Nachführung eines auf einem Monitor zum Ersatz eines Außenspiegels eines Fahrzeugs dargestellten Bildausschnitts eines Kamerabildes bei Kurvenfahrt eines aus dem Fahrzeug und einem Anhänger bestehenden Gespanns.

Es wird ein demgegenüber verbessertes Verfahren zur Nachführung des Bildausschnitts vorgeschlagen.

Erfindungsgemäß wird zunächst die Position einer vertikalen Kante des Anhängers aus zumindest zwei aufeinanderfolgenden Kamerabildern bestimmt, und anschließend der Bildausschnitt entsprechend der Position der vertikalen Kante nachgeführt . Dies hat den Vorteil, dass keine Detektion der Kopfbewegung des Fahrers erforderlich ist, auf dazu nötige Hardware in der Fahrerkabine kann verzichtet werden. Es wird erreicht, dass Kopfbewegungen des Fahrers, die aus anderen Gründen als der Blickwinkeländerung bezüglich des Außenspiegels erfolgen, keine unerwünschte Nachführung des Bildausschnitts zur Folge haben. Die Auswertung zumindest zweier aufeinanderfolgender Kamerabilder erhöht die Zuverlässigkeit der Kantenpositionsdetektion im Vergleich zur Auswertung eines Standbildes. Hier werden Bewegungen, die sich aus aufeinanderfolgenden Bildern erkennen lassen, berücksichtigt. Von Bild zu Bild unterschiedlich auftretende Schmutzeffekte, wie Bildrauschen, haben einen weniger starken Einfluss auf die Auswertung, da sie sich wegmitteln. Je mehr aufeinanderfolgende Bilder verwendet werden, umso besser können Bewegungseffekte genutzt werden um Fehldetektionen zu vermeiden, und umso besser werden Fehler weggemittelt. Es ist vorgesehen, unmittelbar aufeinanderfolgende Kamerabilder zu verwenden. Alternativ oder zusätzlich wird jedes zweite, dritte oder allgemein n-te Bild zur Auswertung herangezogen, wobei auch abwechselnd eine unterschiedliche Anzahl Bilder übersprungen werden kann, um ein effektives n zu erreichen, das zwischen zwei natürlichen Zahlen liegt. Zum einen wird dadurch der Takt der Auswertung an die Bildfrequenz der Kamera angepasst. Zum anderen treten Bewegungsunterschiede bei Verwendung jedes zweiten, dritten etc. Bildes auffälliger hervor. Dies kann insbesondere bei Langsamfahrt von Vorteil sein, wobei bei zu großem n die Auswertung zu langsam werden kann. Eine Anpassung auf die aktuell herrschenden Bedingungen ist hier sinnvoll. Die Nachführung des auf dem Monitor dargestellten Bildausschnitts erfolgt so, dass die hintere Kante des Anhängers sowie die hinter diesem befindlichen Teile der Umwelt für den Fahrer sichtbar sind. Dies erfolgt beispielsweise durch Stauchen des zwischen Fahrzeug und hinterer Kante des Anhängers liegenden Bereichs des Kamerabildes, durch lineares Verschieben des Bildausschnitts, so dass die Kante etwa im dem Fahrzeug zugewandten Drittel des Monitors abgebildet wird, durch Einblenden eines vergrößerten Bildausschnitts, oder auf andere geeignete Weise.

Das Fahrzeug ist das Zugfahrzeug eines Gespanns, es kann sowohl ein LKW, ein PKW, ein Traktor, Bus, Sattelschlepper oder ähnliches sein. Als Anhänger ist der Auflieger eines Sattelzugs vorgesehen oder ein ein- oder mehrachsiger Anhänger. Gegebenenfalls weist das Gespann auch mehr als einen Anhänger auf. Die vertikale Kante ist eine für das hintere Ende des Anhängers signifikante Kante. Kanten können mit bekannten Verfahren zuverlässig bestimmt werden. Bei Anhängern mit hohem Aufbau weist das hintere Ende des Anhängers üblicherweise eine senkrechte Kante auf. Bei Anhängern, die zum Transport von Containern genutzt werden, ist als signifikante Kante die hintere Kante des Containers nutzbar. Ist ein solcher Anhänger ohne aufliegenden Container unterwegs, wird die im unteren Bereich befindliche Hinterkante des Anhängers genutzt.

Gemäß der Erfindung wird entlang zumindest einer Linie, die die vertikale Kante des Anhängers schneidet, zumindest ein Punkt als Kantenpunkt bestimmt. Zu diesem Kantenpunkt wird ein Bewegungsvektor und für diesen ein Verlässlichkeitsmaß bestimmt. Das Verlässlichkeitsmaß dient dazu, den Vektor höher oder niedriger zu gewichten. Der Bildausschnitt wird nicht direkt anhand der Bewegungsvektoren nachgeführt. Stattdessen werden die Vektoren verwendet, um die Anhängerkante zu lokalisieren und dann den Ausschnitt entsprechend der lokalisierten Position nachzuführen. Dies hat den Vorteil, dass die Auswertung vereinfacht und beschleunigt wird, da nicht das gesamte Bild auszuwerten ist, sondern die Auswertung auf einen relevanten Bereich des Bildes beschränkt ist, hier den Bereich um die Linie herum oder die entsprechenden Bildbereiche im Fall von mehreren Linien. Statt einer zweidimensionalen Auswertung, die das gesamte Kamerabild betrifft, wird die Auswertung auf einen oder mehrere quasi eindimensionale Bereiche beschränkt. Im Allgemeinen weist jeder Anhänger eine vertikale hintere Kante auf, die Bildpunkte des Anhängers von Bildpunkten der Umgebung trennt. Die auszuwertende Linie wird so gewählt, dass sie diese Kante schneidet. Die Linie ist im ersten Ansatz eine Gerade, aber auch eine gekrümmte Linie ist hier sinnvoll möglich, beispielsweise in Anpassung auf die Fahrzeug-Anhänger-Konfiguration, Kameraeigenschaften, Verzerrung oder Montagewinkel der Kamera oder ähnliches. Eine bevorzugte Linie liegt unterhalb der Höhe der Ladefläche, etwa im für die rückwärtigen Anzeigeelemente wie Bremslicht, Rückfahrleuchte, Richtungsanzeiger, Rücklicht, Gefahrgutkennzeichnungstafel, Unterfahrschutz oder ähnliches vorgesehenen Bereich. Auf dieser Höhe sind auf jeden Fall Bestandteile des Anhängers vorhanden, auch wenn keine Ladung mit senkrechter Kante vorhanden sein sollte. Insbesondere bei Anhängern mit festem Aufbau oder Containern ist es sinnvoll, zusätzlich oder sogar ausschließlich eine Linie auszuwerten, die sich auf Höhe des Aufbaus oder Containers befindet. In dieser Höhe ist der Kontrast zwischen Anhänger und Umgebung oft größer als in niedriger Höhe, und daher besser auswertbar. Auch ist die mögliche Beeinträchtigung des Kamerabildes durch aufgewirbelten Staub, Spritzwasser oder dergleichen auf dieser Höhe geringer, was die Verlässlichkeit der Auswertung erhöht.

Zumindest zu Beginn des Verfahrens wird als die die vertikale Kante kreuzende Linie eine Linie gewählt, die einen Großteil des Kamerabildes oder das ganze Kamerabild durchläuft. Dies stellt sicher, dass ein Kreuzungspunkt von Linie und Kante vorhanden ist, unabhängig von der aktuellen Position der Kante im Bild. Im späteren Verlauf des Verfahrens wird sinnvollerweise eine kürzere Linie gewählt, die in etwa symmetrisch zu dem zuvor bestimmten Kantenpunkt angeordnet ist. Dies verringert den Rechenaufwand ohne die Wahrscheinlichkeit, einen Kantenpunkt zu finden, zu reduzieren.

Weist der Kantenpunkt einen von Null verschiedenen Bewegungsvektor auf, so ist dies ein Anzeichen dafür, dass die hintere Kante sich seitlich bewegt, was eine Nachführung des Bildausschnitts erforderlich macht. Aus der Bildverarbeitung sind Verfahren zur Bestimmung der Zuverlässigkeit eines Bewegungsvektors bekannt. Hier gehen die Verlässlichkeit der eindimensionalen Kantendetektion, der Bewegungsdetektion, die durch Eigenschaften des Kamerabildes wie Kontrast bezüglich Farbe oder Helligkeit beeinflusste Verlässlichkeit der Auswertung und/oder anderes ein. Bekannt aus der Literatur sind ähnliche Verfahren, beispielsweise beim "Differenziellen Optischen Fluss" die Konditionszahl des 2x2 Gleichungssystems, beim Block-Matching die SAD oder SSD, die sich aus dem Vergleich der Bildblöcke ergibt, oder beim Merkmalsabgleich der Abstand zwischen den Deskriptoren der zusammenpassenden Merkmalspunkte. Liegt das Verlässlichkeitsmaß oberhalb eines vorgegebenen Werts, so wird davon ausgegangen, dass der Bewegungsvektor nicht etwa aufgrund einer Fehldetektion von Null verschieden ist, sondern eine tatsächlich vorhandene Bewegung anzeigt. Die oben genannten, aus der Literatur bekannten Verlässlichkeitsmaße ähnlicher Verfahren sind genaugenommen Maße für die Unverlässlichkeit: Wenn sie Null sind, ist die Verlässlichkeit maximal und kleiner als Null können sie aufgrund der Berechnung nicht werden. Ein Verlässlichkeitsmaß erhält man dann beispielsweise durch simple Invertierung, also Bildung von 1/x.

Erfindungsgemäß ist nach einer Variante vorgesehen, lokale Extrema in Ableitungen einer Bildfunktion entlang der Linie zu bestimmen, und an diesen Punkten Bewegungsvektoren zu berechnen. Die lokalen Extrema sind dazu eine einfache Möglichkeit. Zum Anhänger gehörende Punkte auf der Linie bewegen sich üblicherweise sehr wenig relativ zur Kamera. Im Fall von Schattenbewegungen erfolgt die Bewegung im Allgemeinen mit anderer Geschwindigkeit oder anderer Richtungskomponente als für den Hintergrund. Als Ableitungen werden finite Differenzen in der Intensitätsfunktion, der Farbabstand benachbarter Pixel oder andere geeignete Auswertungen von Bildfunktionen verwendet. Lokale Extrema in Ableitungen treten auch durch Rauschen hervorgerufen auf. Bei der Bildfunktion handelt es sich um die Grauwerte eines Bildes. Gemäß einer anderen erfindungsgemäßen Variante wird ein beliebiges bekanntes Punktdetektionsverfahren auf den eindimensionalen Fall auf der Linie angepasst. Dies hat den Vorteil, verlässlichere Ergebnisse zu liefern, ohne großen zusätzlichen Berechnungsaufwand zu erfordern.

Erfindungsgemäß ist vorgesehen, dass zu mehreren Punkten der die vertikale Kante des Anhängers schneidenden Linie jeweils ein Bewegungsvektor bestimmt wird. Dann kann beispielsweise eine Unstetigkeit in der Abfolge der zu diesen Punkten bestimmten Bewegungsvektoren entlang der Linie als Ort des Kantenpunkts bestimmt werden. Hier wird ein ähnlicher Effekt ausgenutzt wie zuvor beschrieben, allerdings wird hier auf die Bildung der Ableitung verzichtet, sondern lediglich ein Vergleich und Detektion von Unstetigkeiten durchgeführt. Dies reduziert den erforderlichen Rechenaufwand. Aber auch andere Verwendungen der hier bestimmten Bewegungsvektoren ist sinnvoll möglich.

Die die vertikale Kante schneidende Linie wird erfindungsgemäß aus der zur Auswertung des vorangegangenen Kamerabildes verwendeten Linie bestimmt, indem diese um den zum vorangegangenen Kamerabild bestimmten Bewegungsvektor verschoben wird. Dies hat den Vorteil, dass die Linie mit hoher Wahrscheinlichkeit dort liegt, wo sie die Kante schneidet, da sie entsprechend der Kante verschoben wird. Diese Verschiebung erfolgt sowohl in horizontaler als auch in vertikaler Richtung, wenn der Bewegungsvektor die entsprechenden Komponenten aufweist. Insbesondere die Verwendung von kurzen Linien, die nicht die gesamte Breite des Kamerabildes abdecken, wird damit ermöglicht ohne die Gefahr, dass sich die Kante aus dem Bereich der Linie heraus bewegt. In vertikaler Richtung wird die Linie nicht bewegt, da die Geometrie des Gespanns relativ zur Kamera abgesehen vom Anhänger-Knickwinkel immer gleich bleibt. Dass sie nicht von ganz links nach ganz rechts im Bild geht und daher horizontal bewegt werden kann, ist eine Möglichkeit. Die Linie kann ebenso von ganz links nach ganz rechts gehen.

Vorteilhafterweise wird ein zu einem vorhergehenden Kamerabild bestimmter oder durch ein Umweltmodell gegebener Bewegungsvektor als Ausgangspunkt genommen, und daraus beispielsweise mit Hilfe eines Optischen-Fluss-Verfahrens über eine 2x2-Gleichungssystem ein zum aktuellen Kamerabild passender aktualisierter Bewegungsvektor bestimmt. Ein 2x2-Gleichungssystem lässt sich auf bekannte Weise ohne großen Aufwand lösen. Es gibt mehrere Verfahren zur Bestimmung der Bewegungsvektoren. Eines ist das differenzielle Lukas-Kanade-Verfahren, das mit den 2x2-Gleichungssystemen arbeitet. Ebenso können aber auch Pixel- oder Merkmalsvergleichsverfahren verwendet werden.

Es ist weiterhin vorgesehen, durch Addieren einer Regularisierungs-Matrix zur 2x2-Matrix des Gleichungssystems eine regularisierte Matrix zu bestimmen. Dadurch wird die Bewegung hauptsächlich in horizontaler Richtung gesucht, das heißt der Richtung, die eine verlässliche Bewegungsvektorbestimmung zulässt. Das entscheidende im Falle der Regularisierung ist, dass nur in vertikaler Richtung regularisiert wird. In herkömmlichen Regularisierungsverfahren wird immer in beide Richtungen regularisiert. Es wäre auch eine Bestimmung der vertikalen Bewegung ebenso nützlich, jedoch ist dies oft nicht zuverlässig möglich, da die Anhängerhinterkante oft an allen vertikalen Positionen gleich aussieht. Daher wird der Suchaufwand erfindungsgemäß erspart und durch die Regularisierung eine bevorzugte vertikale Position vorgegeben, die sich etwa aus vorherigen Bewegungen oder aus einem Umweltmodell ergibt. Hier wird nicht der Bewegungsvektor direkt, sondern die Matrix aktualisiert und daraus dann durch die Lösung eines 2x2-Gleichungssystems der Bewegungsvektor bestimmt.

Durch Multiplikation der Regularisierungsmatrix mit einer Rotations-Matrix wird weiterhin eine finale Matrix bestimmt, falls es sich bei der auszuwertenden, die hintere Kante des Anhängers schneidenden Linie um eine gekrümmte Linie handelt.

Eine einfache Möglichkeit, das Verlässlichkeitsmaß zu erhalten, besteht darin, die Konditionszahl der finalen Matrix dafür zu verwenden. Die Verwendung eines aktualisierten Bewegungsvektors, der auf Basis eines Bewegungsvektors bestimmt wurde, der zu einem vorhergehenden Kamerabild gehört, hat den Vorteil, dass ein solcher aktualisierter Bewegungsvektor eine bessere Approximation ist als der ungeänderte vorhergehende Bewegungsvektor.

Das Bewegungsvektorsuchverfahren wird vorzugsweise durch vorherige Bewegungsvektoren (BVi(t-1)) und/oder durch Vorwissen initialisiert. Es wird ebenfalls zusätzlich oder alternativ durch vorherige Bewegungsvektoren (BVi(t-1)) und/oder durch Vorwissen beschränkt.

Eine erfindungsgemäße Steuerungseinheit weist eine Kantenpunkt-Bestimmungs-Einheit auf, die eine Bildkantenbestimmung oder Merkmalsbestimmung durchführt, eine Bewegungsvektor-Bestimmungs-Einheit, eine Verlässlichkeitsmaß-Bestimmungs-Einheit, eine Verlässlichkeitsmaß-Bewertungs-Einheit und eine Bildausschnitt-Nachführungs-Einheit. Die Bildausschnitt-Nachführungs-Einheit weist auch die Funktion einer Anhängerkantenbestimmungseinheit auf. Funktion und Vorteile entsprechen denjenigen, die zum Verfahren beschrieben sind.

In anderen Worten betrifft die Erfindung ein Kamera-MonitorSystem zum Ersatz des Außenspiegels in LKWs, um beispielsweise Treibstoffkosten einzusparen. Eine Nachführung des auf dem Display angezeigten Bildausschnittes nach außen ist bei angehängtem Anhänger in Kurvenfahrten notwendig, um dem Fahrer die Sicht auf die Hinterkante seines Anhängers anstatt nur auf dessen Seitenplane zu ermöglichen. Insbesondere beim Rangieren ergibt sich diese Notwendigkeit auch durch die wegfallende Möglichkeit, durch Bewegung des Kopfes das Sichtfeld zu verändern, wie dies bei herkömmlichen Spiegeln der Fall ist.

Für die Nachführung wird eine automatische Erkennung der aktuellen x-/y-Position der vertikalen Hinterkante des Anhängers im Bild vorgeschlagen. Da sich die Hinterkante über eine gewisse Länge erstreckt, gelten für die y-Position gewisse Vorgaben, zum Beispiel soll sie einen Meter über dem Boden erkannt werden. Zu beachten ist hierbei, dass eine Vielzahl verschiedener Anhänger verwendet werden können, und dass die Rechenleistung des Bildverarbeitungssystems sehr stark eingeschränkt ist.

Auf Einzelbildern basierende Kantendetektionsverfahren, wie die sogenannte "Canny Edge Detection", sind für die gegebene Aufgabe größtenteils ungeeignet, da oftmals viele weitere Kanten im Bild enthalten sind. Diese Kanten sind unter anderem Struktur und Bedruckung der LKW-Anhängerplane, Fahrspurmarkierungen auf der Straße, sichtbare Fremdfahrzeuge, weitere Objekte der Umgebung wie z. B. Beschilderung und Bauwerke. Kanten dieser Objekte sind nicht in jeder Situation und mit überschaubarem Rechenaufwand von der Anhängerhinterkante zu unterscheiden.

Umgebungsrekonstruktions- und Objekterkennungsverfahren wie zum Beispiel das sogenannte "Structure-From-Motion"-Verfahren bedienen sich daher der leicht verschobenen Position von markanten Objektpunkten in mehreren, aus unterschiedlichen Positionen aufgenommenen Bildern, die beispielsweise von unterschiedlichen Kameras stammen oder bei bewegter Kamera zu aufeinanderfolgenden Zeitpunkten aufgezeichnet wurden. Hierbei wird insbesondere die unterschiedliche Verschiebung von Vordergrund- und Hintergrundobjekten genutzt. Diese treten aufgrund von unterschiedlichen Abständen zur Kamera oder aufgrund von unabhängiger Objektbewegung auf.

Sowohl eine Bewegung der Kamera zusammen mit dem LKW, als auch eine Bewegung des Anhängers unabhängig von seiner Umgebung ist bei typischen Fahrsituationen gegeben. Kritisch ist jedoch nach wie vor eine robuste Erkennung, Lokalisierung und Unterscheidung der Anhängerkante von anderen Objektkanten im Bild.

Die derzeit wichtigsten Verfahren zur Bestimmung der Verschiebung können grob unterschieden werden in: Differenzielle Verfahren des optischen Flusses (wie Lucas-Kanade, Horn-Schunck), Bewegungsschätzung mittels Pixelvergleich (wie Block-Matching, Korrelation), sowie Verfahren zur Merkmalserkennung, -beschreibung und -abgleichung (SIFT, SURF, Shi & Tomasi, Harris, BRISK, FAST, BRIEF, ORB).

Sowohl die Erkennung von Punkten von Interesse im Bild, als auch die Berechnung des jeweiligen Verschiebungsvektors sind in herkömmlichen Verfahren dafür ausgelegt und optimiert, innerhalb eines bestimmten Flächenbereichs des Bildes Verschiebungen möglichst exakt zu berechnen. Dies funktioniert besonders gut an Eckpunkten von Objekten, weniger gut dagegen an Kanten, da die Verschiebung in Richtung der Kante nicht robust erkannt werden kann. Verschiebungen werden daher von den herkömmlichen Verfahren vorzugsweise an Eckpunkten berechnet. Bei der vorliegenden Problemstellung ist es jedoch notwendig, die Verschiebung der Anhängerhinterkante zu erkennen, wobei insbesondere die horizontale Verschiebung benötigt wird. Bei der vertikalen Verschiebung, also in Richtung der Kante, können jedoch Kompromisse in Kauf genommen werden. Für diese Aufgabe sind die oben genannten Verfahren auch nicht sehr effizient bezüglich des Rechenaufwandes, da stets innerhalb einer zweidimensionalen Region des Bildes gesucht werden muss. Die daraus unter anderem resultierende Genauigkeit in vertikaler Richtung kann von nachfolgenden Algorithmen zumeist nicht gewinnbringend genutzt werden. Ebenso kann Vorwissen, das beispielsweise aus vorherigen Bildern oder Umweltmodellen bekannt ist, nicht genutzt werden um den Rechenaufwand zu verringern.

In einem ersten Schritt gemäß der Erfindung erfolgt eine Detektion der Merkmalspunkte von Interesse. Für die gegebene Problemstellung ist insbesondere die Erkennung der horizontalen Verschiebung der Anhängerhinterkante wesentlich. Hierfür genügt es, einen beliebigen Punkt von Interesse auf dieser Kante zu erkennen, der für herkömmliche Anwendungen aufgrund der benötigten vertikalen Verschiebung nicht ausreichen würde und daher von typischen Verfahren nicht erkannt wird. Mit Hilfe von Vorwissen, Umweltmodellen, oder ähnlichem, werden daher eine oder mehrere horizontale oder gekrümmte Linien bestimmt, die die Anhängerhinterkante schneiden. Im einfachsten Fall genügt hier eine horizontale Gerade durch die Mitte des Bildes. Auf dieser werden durch auf das eindimensionale Problem angepasste Detektionsalgorithmen markante Punkte identifiziert.

In einem zweiten Schritt gemäß der Erfindung werden zugehörige Bewegungsvektoren berechnet. Für jeden bestimmten Punkt von Interesse wird nun mit Hilfe eines angepassten Verfahrens ein Bewegungsvektor bestimmt, der angibt, von welcher Position im vorhergehenden Bild sich ein Punkt an den aktuellen Punkt von Interesse bewegt hat beziehungsweise zu welcher Position im nächsten Bild sich der aktuelle Punkt von Interesse bewegt. Hierzu können wahlweise alle Verfahren (differentielle, Pixelvergleich, Merkmalsabgleich) in ähnlicher Art und Weise angepasst werden, wobei das Anpassungsprinzip gleich bleibt: Zuerst werden die Suchverfahren nicht mit ihren Standardvektoren, sondern mit bereits aus vorherigen Bildern, Umweltmodellen, oder ähnlichem bekannten Vektorabschätzungen initialisiert. Die Suche wird hierbei sinnvollerweise auf deren Umgebung beschränkt. Optional wird die Suche in vertikaler Richtung noch stärker eingeschränkt oder vollständig übersprungen, da eine vertikale Kante, wie sie bei der Anhängerhinterkante vorliegt, jeder anderen ihrer Positionen sehr stark ähnelt und daher eine exakte Bestimmung der vertikalen Verschiebung oftmals ohnehin nicht möglich ist. Falls dennoch eine vertikale Suche durchgeführt wird, wird diese sinnvollerweise regularisiert, um eine eindeutige Lösung zu ermöglichen. Dies entspricht einer Bevorzugung von Vektoren nahe der um die Vektorabschätzungen verschobenen horizontalen Linien. Für einen auf die Kantendetektion nachfolgenden Algorithmus wird sodann ein Verlässlichkeitsmaß für jeden Vektor bestimmt, der angibt, wie unwahrscheinlich es ist, dass statt dem gefundenen Vektor ein davon abweichender Vektor die wahre Bewegung beschreibt. Dieses kann z. B. über die Passgenauigkeit oder über den Gewinn in der Passgenauigkeit gegenüber ähnlichen Kandidatenvektoren ermittelt werden. Falls die Bestimmung der Verlässlichkeit mit dem vorgesehenen Verfahren nicht möglich oder sinnvoll ist, wird hier auch auf die entsprechende Methode eines anderen Verfahrens (zum Beispiel das sogenannte Block-Matching) zurückgegriffen. Schließlich kann durch die näher beieinander liegenden Merkmalspunkte (aufgrund der Bestimmung entlang nur einer Dimension) oftmals durch geschickte Vermeidung von Doppelberechnungen Rechenaufwand eingespart werden.

Die Erfindung ist dazu geeignet, die Hinterkante von Anhängern bei Nutzfahrzeugen oder PKWs zu erkennen. Dabei kann die Kamera sowohl eine nach hinten gerichtete Kamera zum Erzeugen eines Rückspiegel-Ersatz-Bildes sein als auch eine andere geeignete Kamera, wie beispielsweise eine Rückfahrkamera.

Vorteile der Erfindung sind unter anderem:
Es wird ein deutlich geringerer Rechenaufwand bei der Detektion von Kantenpunkten benötigt. Es werden häufiger korrekte Kantenpunkte auf der Anhängerkante gefunden. Bei der Berechnung von Bewegungsvektoren ist ein deutlich geringerer Rechenaufwand erforderlich. Aufgrund von geeigneter Initialisierung treten weniger Ausreißer und schlecht bestimmte Bewegungsvektoren auf. Mittels der Regularisierung wird eine eindeutige und bessere Lösung des für Merkmalspunkte auf Kanten schlecht konditionierten Vektorbestimmungsproblems erzielt. Das Verlässlichkeitsmaß kann auch bei nachfolgenden, hier nicht beschriebenen Algorithmen genutzt werden, was dort zu besseren Resultaten führt.

Weitere Vorteile und Varianten der Erfindung sind auch der folgenden Beschreibung von Ausführungsbeispielen anhand der Figuren zu entnehmen. Dabei zeigen:
- Fig. 1: Gespann in dem ein erfindungsgemäßes Verfahren implementiert ist,
- Fig. 2: Monitor und Außenspiegel aus Fig.1 aus Sicht des Fahrers,
- Fig. 3: hinterer Teil des Anhängers mit beispielhafter Bildfunktion,
- Fig. 4: Monitor mit unterschiedlichen Bildausschnitten,
- Fig. 5: erfindungsgemäße Steuerungseinheit und Flussdiagramm des erfindungsgemäßen Verfahrens,
- Fig. 6: Bestimmung des Kantenpunkts aus vorgegebener Linie,
- Fig. 7: Bestimmung des Kantenpunkts aus Differenzen,
- Fig. 8: Bestimmung des Kantenpunkts aus Ableitung,
- Fig. 9: Detail zur Bestimmung des Kantenpunkts,
- Fig. 10: Monitorbild gemäß einer Ausführungsform,
- Fig. 11: Berechnung des Bewegungsvektors gemäß Ausführungsform der Fig.10.

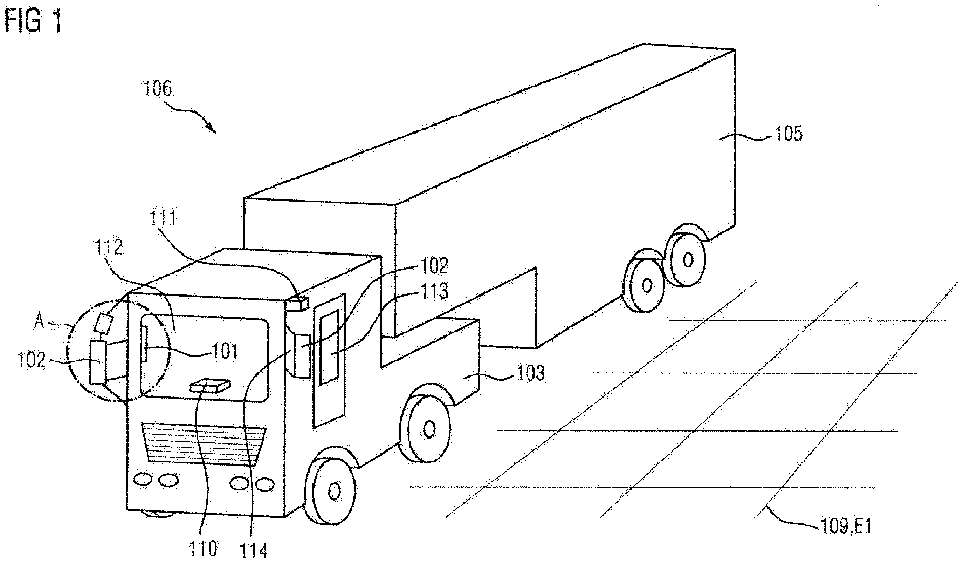

Fig. 1 zeigt ein Gespann 106 bestehend aus Fahrzeug 103 und Anhänger 105. Die Umgebung 109 des Gespanns 106 ist hier schematisch als Ebene E1 dargestellt. Das Fahrzeug 103 ist mit einer Steuerungseinheit 110 zur Verarbeitung eines Kamerabildes einer Kamera 111 ausgestattet. Die Steuerungseinheit 110 berechnet gemäß dem erfindungsgemäßen Verfahren einen Bildausschnitt, der auf einem im Innenraum des Fahrzeugs 103 angebrachten Monitor 101 dargestellt wird. Dieser Bildausschnitt entspricht dem, was der Fahrer des Fahrzeugs 103 üblicherweise in seiner normalen Sitzposition auf den Außenspiegeln 102 sieht beziehungsweise was er durch Drehen oder Verschieben des Kopfs dort sehen kann. Der eingekreiste Bereich A zeigt den Übergangsbereich zwischen Windschutzscheibe 112 und rechtem Seitenfenster 113 (hier nicht sichtbar) . Der Bereich A wird in der folgenden Abbildung aus Sicht des Fahrers gezeigt.

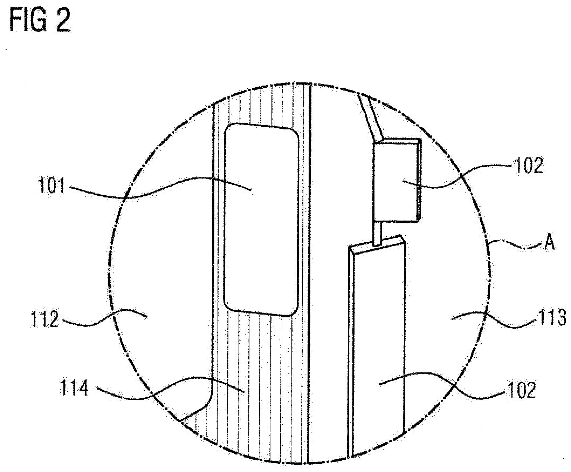

Fig. 2 zeigt den Monitor 101 und den Außenspiegel 102 aus Bereich A der Fig. 1 aus Sicht des Fahrers im rechten Teil des Innenraums des Fahrzeugs 103. Der Monitor 101 ist an der A-Säule 114 der Fahrerkabine angebracht. Er verdeckt daher keinen Bereich der Windschutzscheibe 112 oder der Seitenfenster 113. Durch das Seitenfenster 113 sieht man den hier aus zwei Teilen bestehenden Außenspiegel 102 auf der rechten Seite des Fahrzeugs 103. Der Außenspiegel 102 verdeckt einen Teil des Sichtfeldes des Fahrers und wird daher durch den Monitor 101 ersetzt. Er ist hier nur zur Verdeutlichung und zum Vergleicht mit der herkömmlichen Lösung dargestellt.

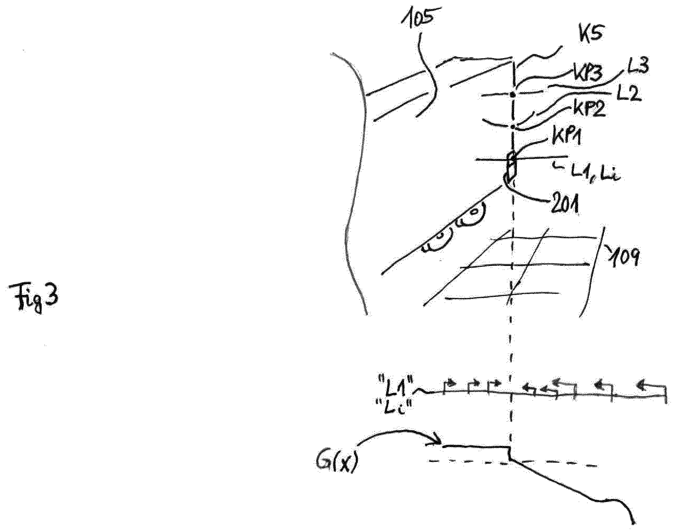

Fig. 3 zeigt den hinteren Teil des Anhängers 105 mit ausgewählten Linien L1, L2, L3 zum Bestimmen von Kantenpunkten KP1, KP2, KP3. Diese können auch weiter links liegen, also auf dem Anhänger, oder weiter rechts, also im Hintergrund. Im unteren Teil sind Bewegungen einzelner Bildpunkte sowie eine dazugehörige Bildfunktion G(x) sowie deren Ableitung G'(x) gezeigt. Die Linie L1 ist im unteren Bereich des Anhängers 105 angeordnet, etwa auf Höhe einer Rückleuchteneinheit 201 auf etwa 1m Höhe von der Fahrbahn aus gemessen. Die Linie L1 schneidet auf jeden Fall die Kante K5, unabhängig davon ob der Anhänger 105 mit einem Aufbau, Container oder anderer Ladung, die den oberen Teil der hinteren Kante K5 bildet, versehen ist oder nicht. Der Schnittpunkt der Linie L1 mit der Kante K5 ist der Kantenpunkt KP1. Im oberen Bereich des Anhängers 105 ist eine weitere gerade Linie L3 eingezeichnet. Sie liegt im oberen Bereich der Ladung beziehungsweise des Aufbaus und lässt sich daher gut auswerten. Ihr Schnittpunkt mit der Kante K5 ist der Kantenpunkt KP3. Als weitere Variante ist eine gekrümmte Linie L2 eingezeichnet, mit dem Kantenpunkt KP2. Ihre Krümmung ist an Eigenschaften der Kamera 111 und/oder der Geometrie/Beschaffenheit des Anhängers 105 angepasst, hier aber nur schematisch angedeutet.

In der unteren Hälfte der Fig. 3 sind im oberen Teil Bewegungsvektoren zu einigen Punkten der Linie L1 gezeigt. Ihre Länge deutet die Geschwindigkeit der Bewegung an, je länger desto schneller. Als Bildfunktion ist die Geschwindigkeit G(x) aufgetragen. Im rechten Teil ist sie positiv, entsprechend der Bewegung der bei Kurvenfahrt im Kamerabild 104, KB nach rechts wandernden Bildpunkte. Im rechten Bereich ist G(x) negativ, entsprechend der sich im Kamerabild KB, 104 nach links bewegenden Bildpunkte der Umgebung 109. Eine Ableitung wird nur von einer Bildfunktion basierend auf Pixel-Grauwerten im Bild berechnet, nicht aber von einer Funktion basierend auf Bewegungsvektoren. Sobald die Bewegungsvektoren bestimmt sind, ist das erfindungsgemäße Verfahren abgeschlossen.

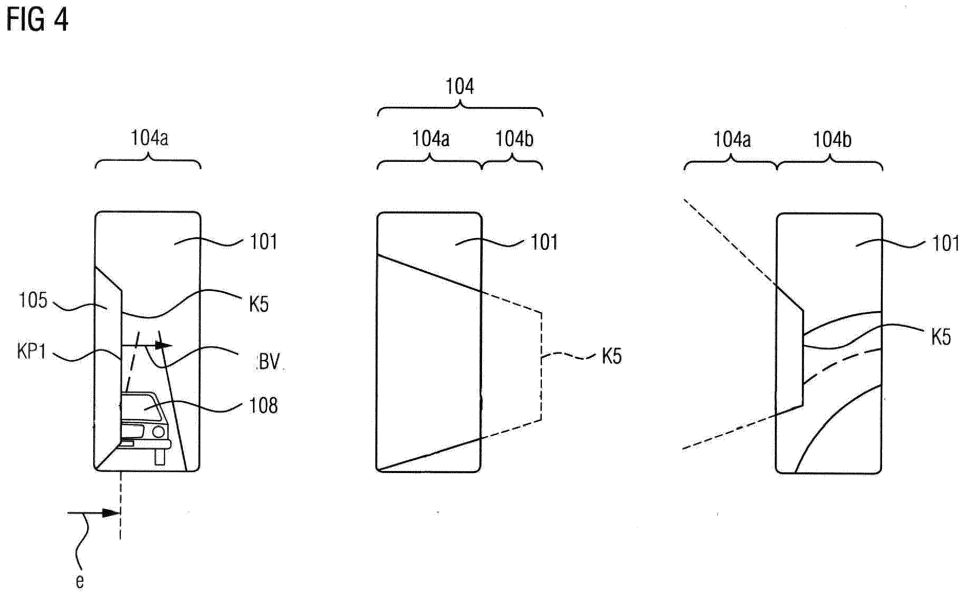

Fig. 4 zeigt links, in der Mitte und rechts jeweils einen Monitor 101 mit unterschiedlichen Bildausschnitten 104a, 104b des Kamerabilds 104. Die folgende Beschreibung bezieht sich zunächst auf den linken Teil der Fig. 4. Der hier dargestellte Bildausschnitt 104a zeigt alle für den Fahrer in dieser Situation relevanten Informationen: Den Anhänger 105 mit seiner hinteren Kante K5 sowie als Objekt 108 der Umgebung 109 einen nachfolgenden PKW.

Bei Kurvenfahrt des Gespanns 106 wandert die Kante K5 von der im linken Teil der Fig. 4 dargestellten Position ausgehend entsprechend dem Bewegungsvektor BV aus dem auf dem Monitor 101 dargestellten Bildausschnitt 104a heraus in den Bildausschnitt 104b. Dies ist im mittleren Teil der Fig. 4 gezeigt, in dem der Bildausschnitt 104a auf dem Monitor 101 sichtbar ist, und der Bildausschnitt 104b rechts neben dem Monitor liegt, also für den Fahrer nicht sichtbar ist.

Der auf dem Monitor 101 dargestellte Bildausschnitt wird erfindungsgemäß entsprechend dem Wert des Bewegungsvektors BV nachgeführt. Wie im rechten Teil der Fig. 4 gezeigt, wird dann der Bildausschnitt 104b auf dem Monitor 101 dargestellt, in dem die hintere Kante K5 des Anhängers 105 wieder für den Fahrer sichtbar ist. Mit der Kante K5 sind dann auch wieder die dahinterliegenden Teile der Umgebung 109 für den Fahrer sichtbar. Der Bildausschnitt 104a, der in dieser Situation keine für den Fahrer relevante Information enthält, ist hier links neben dem Monitor 101, also auf diesem nicht sichtbar, angedeutet.

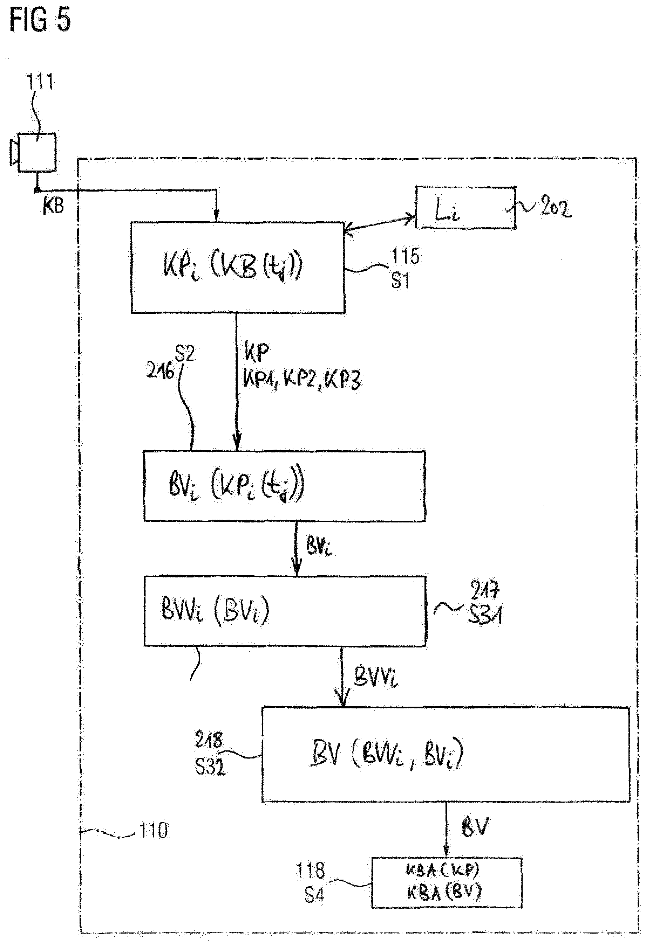

Fig. 5 zeigt eine erfindungsgemäße Steuerungseinheit 110 und ein Flussdiagramm des erfindungsgemäßen Verfahrens. Die Steuerungseinheit 110 hat eine Kantenpunkt-Bestimmungs-Einheit 215, eine Bewegungsvektor-Bestimmungs-Einheit 216, eine Verlässlichkeitsmaß-Bestimmungs-Einheit 217, eine Verlässlichkeitsmaß-Bewertungs-Einheit 218 und eine Bildausschnitt-Nachführungs-Einheit 118. Ein Ausgang der Kamera 111 ist mit einem Eingang der Kantenpunkt-Bestimmungs-Einheit 215 verbunden. In der Kantenpunkt-Bestimmungs-Einheit 215 wird ein erster Schritt S1 ausgeführt. Ihr Ausgang ist mit einem Eingang der Bewegungsvektor-Bestimmungs-Einheit 216 verbunden. Die Kantenpunkt-Bestimmungs-Einheit 215 ist auch mit einem Speicher 202 verbunden. Gemäß einer Variante der Erfindung werden aus dem Speicher 202 eine oder mehrere Linien Li abgerufen, die zur Bestimmung des Kantenpunkts KPi verwendet werden. Es besteht weiterhin die Möglichkeit, eine gegebenenfalls abgeänderte, aktualisierte, oder neue Linie Li in dem Speicher 202 abzulegen. Dies erfolgt beispielsweise aus Schritt S1 heraus, durch Aufspielen von außen in die Steuerungseinheit 110 hinein, oder auf andere geeignete Weise.

Gemäß einer Variante wird gleiches auch mit der Bewegungsvektor-Bestimmungs-Einheit 216 gemacht. Hier werden in einem Speicher die Bewegungsvektoren des vorherigen Bildes gespeichert und für die Initialisierung der Bewegungsvektorbestimmung im nächsten Bild verwendet. In einer alternativen Variante werden dann in diesem Speicher auch die Umwelt- bzw. Fahrzeugmodellinformationen für die Initialisierung verwendet.

In der Bewegungsvektor-Bestimmungs-Einheit 216 wird ein zweiter Schritt S2 ausgeführt, ihr Ausgang ist mit der Verlässlichkeitsmaß-Bestimmungs-Einheit 217 verbunden. In dieser wird ein Schritt S31 ausgeführt, ihr Ausgang ist verbunden mit der Verlässlichkeitsmaß-Bewertungs-Einheit 218. In dieser wird Schritt S32 ausgeführt, ihr Ausgang ist mit der Bildausschnitt-Nachführungs-Einheit 118 verbunden. In dieser wird ein vierter Schritt S4 ausgeführt.

Im ersten Schritt S1 wird die Position KP, KP1, KP2, KP3, allgemein als Position KPi bezeichnet, einer vertikalen Kante im Bild aus zumindest einem Kamerabild KB (tj) bestimmt. Auch bei dem Verfahren zum Merkmalsabgleich werden die Schritte wie in Fig. 5 gezeigt, alle durchlaufen. Der Unterschied ist nur, dass in Schritt S2 zur Bestimmung der Vektoren, Merkmalspunkte aus zwei aufeinanderfolgenden Bildern verwendet werden. Bei den anderen Ausführungsformen werden die Merkmalspunkte nur aus einem Kamerabild bestimmt.

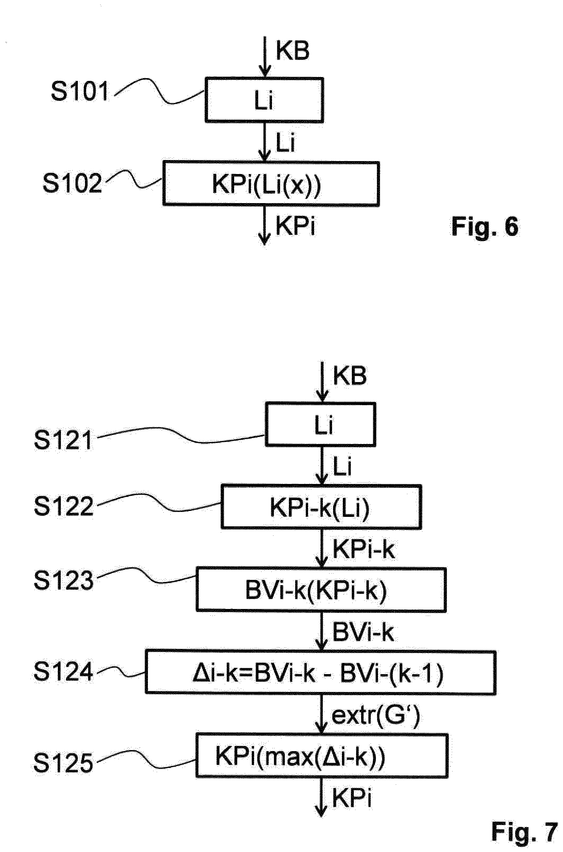

Gemäß einer in Fig. 6 gezeigten Ausführungsform zu Schritt S1 wird zur Bestimmung der Position der Kante K5 in Schritt S101 zumindest eine diese Kante K5 schneidende Linie L1, L2, L3, Li ausgewählt. Entlang dieser Linie, und nicht im gesamten Kamerabild, wird im Schritt S102 der Kantenpunkt KP1, KP2, KP3 detektiert. Zu diesem Kantenpunkt KP1, KP2, KP3 wird aus mehreren zeitlich aufeinanderfolgenden Werten KPi(Tj)) im zweiten Schritt S2 ein Bewegungsvektor BV1, BV2, BV3 bestimmt.

Die Linie L1, L2, L3, Li ist vorzugsweise eine in einem in Fig. 5 gezeigten Speicher 202 des Fahrzeugs 103 abgelegte fest vorgegebene Linie Li. Im Speicher 202 sind vorteilhafterweise mehrere Linien Li gespeichert, die auf unterschiedliche Umgebungsbedingungen oder Fahrzeugkonfigurationen angepasst sind. So sind beispielsweise unterschiedliche vorgegebene Linien für unterschiedliche Anhängerlängen vorgesehen, für unterschiedliche Fahrzeuglängen, für Gespanne mit mehreren Anhängern, für Anhänger mit hohem oder niedrigem Aufbau, und ähnlichem. Gemäß einer Variante wird eine beispielsweise auf eine neue Konfiguration von Fahrzeug und Anhänger angepasste Linie Li in den Speicher 202 abgelegt, um zukünftig zur Verfügung zu stehen. Dies kann sowohl für den oder die kurzfristig nächsten Schritte sein, aber auch dauerhaft für alle zukünftigen Durchführungen des Verfahrens.

Im Schritt S31 wird für den Bewegungsvektor BV1, BV2, BV3 ein Verlässlichkeitsmaß BVV1, BVV2, BVV3 bestimmt. Falls das Verlässlichkeitsmaß BVV1, BVV2, BVV3 innerhalb eines vorgegebenen Bereichs liegt, insbesondere, wenn es größer ist als ein Mindestwert, wird ein Wert BV an Schritt S4 weitergegeben. Der Bildausschnitt KBA wird entsprechend dem Wert des Bewegungsvektors BV im vierten Schritt S4 nachgeführt.

Gemäß einer in Fig. 7 gezeigten Ausführungsform zum Schritt S1 werden die Linie Li im Schritt S121 gewählt und in Schritt S122 mehrere Punkte KPi-k auf dieser Linie Li. Zur Bestimmung der Position der Kante K5 wird in Schritt S123 zu den Punkten KPi-k der die vertikale Kante K5 des Anhängers 105 schneidenden Linie Li jeweils ein Bewegungsvektor BVi-k bestimmt. Gemäß einem Beispiel wird dann die Abfolge der zu diesen Punkten KPi-k bestimmten Bewegungsvektoren BVi-k entlang der Linie Li auf Unstetigkeiten hin untersucht. Dazu wird in Schritt S124 die Differenz Δi-k zweier aufeinanderfolgender Bewegungsvektoren BVi-k, BVi-(k-1) gebildet, und in Schritt S125 das Maximum der Differenzen Δi-k gebildet. Der Punkt PKi an dem das Maximum liegt, also die Unstetigkeit auftritt, wird als Kantenpunkt PKi bestimmt. Der zu diesem Kantenpunkt PKi gehörige Bewegungsvektor BVi wird gemäß einer Variante statt des im Schritt S2 bestimmten Bewegungsvektors BVi verwendet. Andere bekannte Möglichkeiten zur Bestimmung der Kante K5 können hier ebenfalls sinnvoll eingesetzt werden.

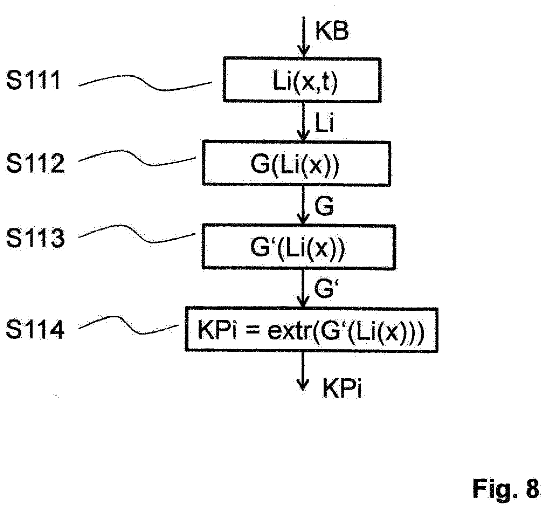

Gemäß einer in Fig. 8 gezeigten Ausführungsform zum Schritt S1 wird zur Bestimmung der Position der Kante K5 eine Bildfunktion G(x) entlang der Linie Li ausgewertet, siehe Fig. 3. Dazu wird in Schritt S111 eine Linie Li ausgewählt, und in Schritt S112 eine Ableitung G'(x) bestimmt, also die Grauwerte entlang der Linie Li, und im Schritt S113 eine Ableitung G' (x) bestimmt. Die Auswahl der Linie Li wird gemäß einer ersten Variante entsprechend den Schritten S101 oder S121 durchgeführt.

Im Schritt S114 werden lokale Extrema G(KP1), G(KP1-1) aus G' (Li(x)) bestimmt. Diese entsprechen den Kantenpunkten KPi. Zur Suche nach lokalen Extrema werden die Ableitungen der Bildfunktion entlang der horizontalen Linien L1, L2, L3 genommen. Diese werden gegebenenfalls zur Rauschunterdrückung vorher tiefpassgefiltert. Ableitungen werden beispielsweise durch finite Differenzen in der Intensitätsfunktion oder durch Farbabstände benachbarter Pixel in geeigneten Farbräumen gebildet. Ebenso ist es möglich, ein gängiges Verfahren zur Merkmalserkennung entsprechend anzupassen.

Ein 2x2-Gleichungssystem kommt in Schritt S2, also für die Bestimmung der Bewegungsvektoren zur Anwendung. Zur Bestimmung der finalen Matrix MF wird die Regularisierungsmatrix addiert: Mf = Rot ^{∗} Reg + MM = Rot ^{∗} Reg + M^T ^{∗} M. Diese Finale Matrix ergibt dann mit einem zeitlichen Bildintensitätsableitungsvektor b ein Gleichungssystem, aus dem der Bewegungsvektor bestimmt wird: BV = MF^-1 + M^T + b. Entsprechend diesem Bewegungsvektor BV wird dann der Bildintensitätsableitungsvektor b neu bestimmt und die Berechnung somit einige Male iterativ wiederholt. Die Einzelheiten sind unter dem Begriff "Lucas-Kanade-Methode" bekannt.

Im Falle von SIFT oder ähnlichen Verfahren erfolgt diese Anpassung vorzugsweise wie folgt: Eine sogenannte "scale space" Pyramide wird lediglich entlang der horizontalen Linie, das heißt in einer Dimension statt in zweien berechnet. Hierdurch entsteht ein zweidimensionaler scale space, in dem Extrema durch den Vergleich des aktuellen Wertes mit nur acht, anstatt sonst 26, Nachbarwerten gesucht werden können. Eine nachfolgende Eliminierung von Kantenpunkten ist nicht notwendig. Auf diese Weise ist bei adäquaten Umweltbedingungen nahezu sichergestellt, dass ein Punkt auf der Anhängerkante gefunden wird.

Gemäß einer Ausführungsform der Erfindung erfolgt die Bewegungsvektorberechnung im zweiten Schritt S2 beziehungsweise im Schritt 123 wie folgt: Es wird ein Differenzielles-Optisches-Fluss-Verfahren, beispielsweise nach B.D. Lucas und T. Kanade (1981) "An iterative image registration technique with an application to stereo vision", Proceedings of Imaging Understanding Workshop, p.121-130, verwendet.

Bei Verwendung von impliziten iterativen Lösungsverfahren wird die Berechnung durch Initialisierung mit einer Vektorabschätzung deutlich beschleunigt und verbessert. Falls zusätzlich mit Auflösungshierarchieebenen gearbeitet wird, können stark tiefpassgefilterte Auflösungshierarchien ohne Einbußen unbetrachtet und damit unberechnet bleiben.

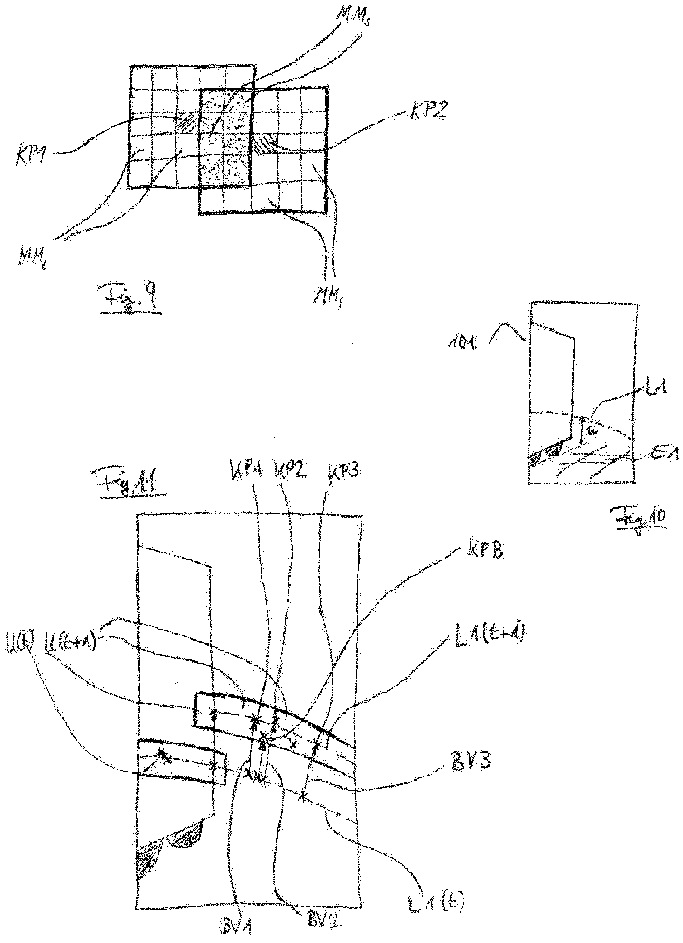

Fig. 9 zeigt ein Detail zur Bestimmung des Kantenpunkts KPi. Die Lösung des Gleichungssystems unterscheidet sich nicht von dem unter dem Begriff "Lucas-Kanade-Methode" bekannten. Die Erfindung unterscheidet sich hiervon in diesem Ausführungsbeispiel allerdings wie folgt: Zum ersten erfolgt die Intitialisierung mit einer Vektorabschätzung statt mit einem Nullvektor in der ersten Interation, die durch vorherige Bewegungsvektoren oder durch ein Fahrzeugmodell gegeben ist. Teilweise können auch die ersten Auflösungshierarchieebenen weggelassen werden. Zum zweiten die Regularisierung senkrecht zur horizontalen Linie. Zum dritten erfolgt einer Aktualisierung der 2x2-Matrizen MM beziehungsweise MF anstatt einer Neuberechnung. Diese Aktualisierung funktioniert wie folgt: Bei M handelt es sich um eine nx2-Matrix, wobei n die Anzahl an verwendeten Pixeln innerhalb einer Umgebung um den aktuellen Kantenpunkt bezeichnet. An jeder dieser n Positionen wird ein Gradient berechnet, der dann in die Zeilen der Matrix M geschrieben wird. Soll nun MM = M^T ^{∗} M für die Berechnung von MF auch an einer angrenzenden Kantenposition mit sich überschneidender Umgebung berechnet werden, wird statt einer zweimaligen Gradientenberechnung und Aufaddierung im Schnittbereich folgendes Verfahren verwendet: Es werden drei Matrizen MM_1, MM_r und MM_s berechnet, und zwar die Matrix MM_1 aus den Umgebungspositionen, die ausschließlich in der Umgebung der ersten Kantenposition KP1 zu finden sind, die Matrix MM_r aus den Umgebungspositionen, die ausschließlich in der Umgebung der zweiten Kantenposition KP2 zu finden sind und die Matrix MM_s aus den Umgebungspositionen die sowohl in der Umgebung der ersten Kantenposition KP1 aus auch in der Umgebung der zweiten Kantenposition KP2 zu finden sind, also sozusagen in der Schnittmenge. Die Matrix für die erste Kantenposition KP1 ergibt sich nun als MM1 = MM_1 + MM_s, die Matrix für die zweite Kantenposition KP2 ergibt sich als MM2 = MM_r + MM_s. Entsprechend lässt sich das Verfahren auch auf mehr als zwei Umgebungsbereiche erweitern. Dabei gilt:
MF = Rot ^{∗} Reg + MM, mit MM = M^T ^{∗} M: MF = Rot ^{∗} Reg + M^T ^{∗} M, und BV = MF^-1 + M^T ^{∗} b. In jeder Iteration wird zur Aktualisierung des berechneten Bewegungsvektors ein 2x2-Gleichungssystem gelöst. Bei exakt horizontaler Merkmalslinie L1, L3 können mit Hilfe eines auf die vertikale Richtung beschränkten Tikhonov-Regularisierers Vektoren bevorzugt werden, deren vertikale Komponente der der Vektorabschätzung entspricht. Hierzu wird auf die entsprechende 2x2-Matrix eine Matrix [0, 0; 0, r] addiert, wobei r der Stärke der Regularisierung entspricht. Bei gekrümmter Linie L2 wird in entsprechend orthogonaler Richtung regularisiert, indem eine Rotationsmatrix multipliziert wird. Als Verlässlichkeitsmaß wird vorzugsweise die Konditionszahl K der finalen Matrix verwendet. Doppelberechnungen bei nahe beieinander liegenden Kantenpunkten KPi werden vermieden, indem bei sich überschneidenden Nachbarschaften zur Matrixermittlung die Matrizen lediglich aktualisiert statt immer neu berechnet werden. Erneute Additionen im sich überschneidenden Bereich entfallen somit.

Gemäß einer Ausführungsform der Erfindung erfolgt die Bewegungsvektorberechnung im zweiten Schritt S2 wie folgt: Es wird ein Pixelvergleichsverfahren, sogenanntes Block-Matching, verwendet. Block-Matching wird häufig in der Videokompression eingesetzt. Es existieren diverse Suchmuster zur schnellen Suche, die typischerweise an der gleichen Stelle im vorherigen Bild KB(tⱼ₋₁) mit der Suche beginnen. Im vorliegenden Fall wird stattdessen zur Beschleunigung an der abgeschätzten Position mit der Suche begonnen. Zur Regularisierung wird das verwendete Abstandskriterium, beispielsweise SAD, SSD, durch Hinzuaddition eines Bestrafungswertes leicht abgeändert. Der Bestrafungswert entspricht dabei dem Abstand zur vertikalen Koordinate der Bewegungsvektorabschätzung. Als Passgenauigkeit wird typischerweise eben dieses Abstandskriterium verwendet. Bei sich überlappenden Blöcken werden vorzugsweise auch hier durch Wiederverwendung bereits getätigter Additionen im Überschneidungsbereich Doppelberechnungen vermieden.

Gemäß einer Ausführungsform der Erfindung erfolgt die Bewegungsvektorberechnung im zweiten Schritt S2 wie folgt: Es wird ein Verfahren zum Merkmalsabgleich genutzt.

Fig. 10 zeigt die Anzeige im Monitor 101 mit der tatsächlich dort nicht angezeigten Linie L1, die sich hier 1m über dem Boden, der Ebene D1, befindet. Die horizontale Linie L1 ist typischerweise in dieser Ansicht gekrümmt, und daher auch so dargestellt. Bei vollständiger Suche wird durch geeignete Initialisierung kein Vorteil erzielt. Erfindungsgemäß wird der Vergleich von Merkmalspunkten zwischen zwei aufeinanderfolgenden Kamerabildern KB(tⱼ₋₁), KB(tⱼ) jedoch lokal eingeschränkt. Die Suche wird in diesem Fall nach wie vor auf die Umgebung der Vektorabschätzung beschränkt. Siehe dazu Fig. 11 mit der Linie L1(t) zum Zeitpunkt t und schraffiert ihre zur Vektorschätzung verwendete Umgebung U (t) . Die Linie L1(t+1) und ihre Umgebung U (t+1) zu einem späteren Zeitpunkt t+1 ist demgegenüber verschoben. Vorzugsweise wird weiterhin die Detektion von Kantenpunkten KP1, KP2, KP3 im zweiten Bild, die hier zusätzlich zu der im aktuellen Bild stattfindet, auf die um die Vektorabschätzung verschobene horizontale Linie L1(t+1) und optional deren Umgebung eingeschränkt. Hier ist eine temporär in vertikaler Richtung verschobene Linie L1(t+1) gemeint, die allerdings zum einen nicht als Linie in einem späteren Bild wiederverwendet wird und zum anderen nicht aus den bestimmten Bewegungsvektoren BVi, sondern aus den Vektoren beispielsweise eines Umgebungsmodells bestimmt wird. Die Bewegungsvektoren BVi stellen die Bewegung der Kantenpunkte KPi zwischen Zeitpunkt t und Zeitpunkt t+1 dar. Entsprechend kann hier das oben beschriebene Verfahren zur Anwendung kommen. Zum Kantenpunkt KPB wird bei der Regularisierung ein Bestrafungswert addiert, da er sehr weit von der verschobenen horizontalen Linie L1(t+1) entfernt liegt. Ebenso wie beim Block-Matching wird auch hier durch Addition eines Bestrafungswertes zum Merkmalsabstandskriterium bzw. Deskriptorwert regularisiert. Der Abstand zwischen den am besten übereinstimmenden Deskriptoren im Deskriptorraum wird in diesem Fall als Passgenauigkeit verwendet.

In einem vierten Schritt S4 wird der Kamerabildausschnitt KBA, entsprechend der Position KP, KP1, KP2, KP3 der vertikalen Kante K5 nachgeführt.

Es steht im Ermessen des Fachmanns, einzelne Varianten der Ausführungsformen durch geeignete andere zu ersetzen, abzuwandeln, oder auf andere Weise als oben beschrieben zu kombinieren.

## Patentansprüche

1. Verfahren zur Nachführung eines auf einem Monitor (101) zum Ersatz eines Außenspiegels (102) eines Fahrzeugs (103) dargestellten Bildausschnitts (104a, 104b, KBA) eines Kamerabildes (104, KB) bei Kurvenfahrt eines aus dem Fahrzeug (103) und einem Anhänger (105) bestehenden Gespanns (106) **dadurch gekennzeichnet, dass**
- die Position (KP, KP1, KP2, KP3) einer vertikalen Kante (K5) des Anhängers (105) aus zumindest zwei aufeinanderfolgenden Kamerabildern (KB(tj)) bestimmt wird, und
- der Bildausschnitt (104a, 104b) entsprechend der Position (KP, KP1, KP2, KP3) der vertikalen Kante (K5) nachgeführt wird.

2. Verfahren nach Anspruch 1, wobei
- zumindest ein Punkt (KP1, KP2, KP3) einer vertikalen Kante (K5) des Anhängers (105) entlang zumindest einer diese Kante (K5) schneidenden Linie (L1, L2, L3) als Kantenpunkt (KP1, KP2, KP3) bestimmt wird,
- zu diesem Kantenpunkt (KP1, KP2, KP3) ein Bewegungsvektor (BV1, BV2, BV3) bestimmt wird,
- ein Verlässlichkeitsmaß (BVV1, BVV2, BVV3, BVVi) für den Bewegungsvektor (BV1, BV2, BV3) bestimmt wird, und
- der Bildausschnitt (104a, 104b) entsprechend dem Wert des Bewegungsvektors (BV1, BV2, BV3) nachgeführt wird, wenn das Verlässlichkeitsmaß (BVV1, BVV2, BVV3) innerhalb eines vorgegebenen Bereichs liegt.

3. Verfahren nach einem der vorhergehenden Ansprüche, wobei lokale Extrema (G(KP1-k), G(KP2-k), G(KP3-k)) in Ableitungen (G' (x)) einer Bildfunktion (G(x)) entlang der Linie (L1, L2, L3) bestimmt werden.

4. Verfahren nach einem der vorhergehenden Ansprüche, wobei ein beliebiges Punktdetektionsverfahren auf den eindimensionalen Fall auf der Linie (Li) angepasst wird.

5. Verfahren nach einem der vorhergehenden Ansprüche, wobei
- zu mehreren Punkten (KPi-k) der die vertikale Kante (K5) des Anhängers (105) schneidenden Linie (Li) jeweils ein Bewegungsvektor (BVi-k) bestimmt wird.

6. Verfahren nach einem der vorhergehenden Ansprüche, wobei
- die die vertikale Kante (K5) schneidende Linie (Li(t)) eines auszuwertenden Kamerabildes KB(t) aus der zur Auswertung des vorangegangenen Kamerabildes (KB(t-1)) verwendeten Linie (Li(t-1)) durch Verschieben um den zum vorangegangenen Kamerabild (KB(t-1)) bestimmten Bewegungsvektor (BV1(t-1)) bestimmt wird.

7. Verfahren nach einem der vorhergehenden Ansprüche, wobei zur Aktualisierung eines Bewegungsvektors (BVi(t-1)) ein 2x2-Gleichungssystem gelöst wird.

8. Verfahren nach einem der vorhergehenden Ansprüche, wobei durch Addieren einer Regularisierungs-Matrix (Reg) zu einer 2x2-Matrix (M) des Gleichungssystems eine regularisierte Matrix (MR) bestimmt wird.

9. Verfahren nach einem der vorhergehenden Ansprüche, wobei durch Multiplikations der Regularisierungsmatrix (Reg) mit einer Rotations-Matrix (Rot) eine finale Matrix (MF) bestimmt wird.

10. Verfahren nach einem der vorhergehenden Ansprüche, wobei die Konditionszahl (K) der finalen Matrix (MF) als Verlässlichkeitsmaß (BVVi) verwendet wird.

11. Verfahren nach einem der vorhergehenden Ansprüche, wobei das Bewegungsvektorsuchverfahren durch vorherige Bewegungsvektoren (BVi(t-1)) und/oder durch Vorwissen initialisiert wird und/oder dadurch beschränkt wird.

12. Steuerungseinheit (110) zur Nachführung eines auf einem Monitor (101) zum Ersatz eines Außenspiegels (102) eines Fahrzeugs (103) dargestellten Bildausschnitts (104a, 104b, KBA) eines Kamerabildes (104, KB) bei Kurvenfahrt eines aus dem Fahrzeug (103) und einem Anhänger (105) bestehenden Gespanns (106), **gekennzeichnet durch**:
- eine Kantenpunkt-Bestimmungs-Einheit (215) mittels der zumindest ein Punkt (KP1, KP2, KP3) einer vertikalen Kante (K5) des Anhängers (105) entlang zumindest einer Linie (L1, L2, L3), die diese Kante (K5) schneidet, als Kantenpunkt (KP1, KP2, KP3) bestimmt wird,
- eine Bewegungsvektor-Bestimmungs-Einheit (216) mittels der zu diesem Kantenpunkt (KP1, KP2, KP3) ein Bewegungsvektor (BV1, BV2, BV3) bestimmt wird,
- eine Verlässlichkeitsmaß-Bestimmungs-Einheit (217) mittels der ein Verlässlichkeitsmaß (BVV1, BVV2, BVV3) für den Bewegungsvektor (BV1, BV2, BV3) bestimmt wird,
- eine Verlässlichkeitsmaß-Bewertungs-Einheit (218) mittels der bestimmt wird, ob das Verlässlichkeitsmaß (BVV1, BVV2, BVV3) innerhalb eines vorgegebenen Bereichs liegt, und
- eine Bildausschnitt-Nachführungs-Einheit (118) mittels der der Bildausschnitt (104a, 104b, KBA) entsprechend dem Wert (BV) des Bewegungsvektors (BV1, BV2, BV3) nachgeführt wird, wenn das Verlässlichkeitsmaß (BVV1, BVV2, BVV3) innerhalb des vorgegebenen Bereichs liegt.

## Claims

1. Method for updating an image section (104a, 104b, KBA) of a camera image (104, KB), displayed on a monitor (101) that replaces an exterior mirror (102) of a vehicle (103), during the cornering of a combination (106) consisting of the vehicle (103) and a trailer (105), **characterized in that**
- the position (KP, KP1, KP2, KP3) of a vertical edge (K5) of the trailer (105) is determined from at least two successive camera images (KB(tj)), and
- the image section (104a, 104b) is updated in accordance with the position (KP, KP1, KP2, KP3) of the vertical edge (K5).

2. Method according to Claim 1, wherein
- at least one point (KP1, KP2, KP3) of a vertical edge (K5) of the trailer (105) is determined as an edge point (KP1, KP2, KP3) along at least one line (L1, L2, L3) that intersects this edge (K5),
- a movement vector (BV1, BV2, BV3) is determined for this edge point (KP1, KP2, KP3),
- a reliability measure (BVV1, BVV2, BVV3, BVVi) is determined for the movement vector (BV1, BV2, BV3) and
- the image section (104a, 104b) is updated in accordance with the value of the movement vector (BV1, BV2, BV3) if the reliability measure (BVV1, BVV2, BVV3) lies within a predetermined range.

3. Method according to either of the preceding claims, wherein local extrema (G(KP1-k), G(KP2-k), G(KP3-k)) are determined in derivatives (G'(x)) of an image function (G(x)) along the line (L1, L2, L3).

4. Method according to any one of the preceding claims, wherein any point detection method is adapted to the one-dimensional case on the line (Li).

5. Method according to any one of the preceding claims, wherein
- respectively one movement vector (BVi-k) is determined for a plurality of points (KPi-k) of the line (Li) that intersects the vertical edge (K5) of the trailer (105).

6. Method according to any one of the preceding claims, wherein
- the line (Li(t)) that intersects the vertical edge (K5) of a camera image KB(t) to be evaluated is determined from the line (Li(t-1)) that is employed to evaluate the preceding camera image (KB(t-1)) by way of a displacement described by the movement vector (BV1(t-1)) that is determined in relation to the preceding camera image (KB(t-1)).

7. Method according to any one of the preceding claims, wherein a 2 x 2 system of equations is solved for updating a movement vector (BVi(t-1)).

8. Method according to any one of the preceding claims, wherein a regularized matrix (MR) is determined by adding a regularization matrix (Reg) to a 2 x 2 matrix (M) of the system of equations.

9. Method according to any one of the preceding claims, wherein a final matrix (MF) is determined by multiplying the regularization matrix (Reg) by a rotation matrix (Rot) .

10. Method according to any one of the preceding claims, wherein the condition number (K) of the final matrix (MF) is used as a reliability measure (BVVi).

11. Method according to any one of the preceding claims, wherein the movement vector search method is initialized and/or restricted by preceding movement vectors (BVi(t-1)) and/or by prior knowledge.

12. Control unit (110) for updating an image section (104a, 104b, KBA) of a camera image (104, KB), displayed on a monitor (101) that replaces an exterior mirror (102) of a vehicle (103), during the cornering of a combination (106) consisting of the vehicle (103) and a trailer (105), **characterized by**:
- an edge point determination unit (215), by means of which at least one point (KP1, KP2, KP3) of a vertical edge (K5) of the trailer (105) is determined as an edge point (KP1, KP2, KP3) along at least one line (L1, L2, L3) that intersects this edge (K5),
- a movement vector determination unit (216), by means of which a movement vector (BV1, BV2, BV3) is determined for this edge point (KP1, KP2, KP3),
- a reliability measure determination unit (217), by means of which a reliability measure (BVV1, BVV2, BVV3) is determined for the movement vector (BV1, BV2, BV3),
- a reliability measure assessment unit (218), by means of which a determination is carried out as to whether the reliability measure (BVV1, BVV2, BVV3) lies within a predetermined range, and
- an image section updating unit (118), by means of which the image section (104a, 104b, KBA) is updated in accordance with the value (BV) of the movement vector (BV1, BV2, BV3) if the reliability measure (BVV1, BVV2, BVV3) lies within the predetermined range.

## Revendications

1. Procédé de suivi d'une portion d'image (104a, 104b, KBA) d'une image de caméra (104, KB), représentée sur un moniteur (101) destiné à remplacer un rétroviseur extérieur (102) d'un véhicule (103), lors d'un virage d'un attelage (106) composé du véhicule (103) et d'une remorque (105), **caractérisé en ce que**
- la position (KP, KP1, KP2, KP3) d'un bord vertical (K5) de la remorque (105) est déterminée à partir d'au moins deux images de caméra (KB(j)) successives, et
- la portion d'image (104a, 104b) est suivie conformément à la position (KP, KP1, KP2, KP3) du bord vertical (K5).

2. Procédé selon la revendication 1,
- au moins un point (KP1, KP2, KP3) d'un bord vertical (K5) de la remorque (105) étant défini en tant que point de bord (KP1, KP2, KP3) le long d'au moins une ligne (L1, L2, L3) qui croise ce bord (K5),
- un vecteur de mouvement (BV1, BV2, BV3) étant défini pour ce point de bord (KP1, KP2, KP3),
- un facteur de fiabilité (BVV1, BVV2, BVV3, BVVi) étant défini pour le vecteur de mouvement (BV1, BV2, BV3) et
- la portion d'image (104a, 104b) étant suivie conformément à la valeur du vecteur de mouvement (BV1, BV2, BV3) lorsque le facteur de fiabilité (BVV1, BVV2, BVV3) se trouve à l'intérieur d'une plage prédéfinie.

3. Procédé selon l'une des revendications précédentes, des extrêmes locales (G(KP1-k), G(KP2-k), G(KP3-k)) étant définies dans des dérivées (G'(c)) d'une fonction d'image (G(x)) le long de la ligne (L1, L2, L3).

4. Procédé selon l'une des revendications précédentes, un procédé de détection de point quelconque étant adapté au cas unidimensionnel sur la ligne (L1).

5. Procédé selon l'une des revendications précédentes,
- un vecteur de mouvement (BVi-k) étant respectivement défini pour plusieurs points (KPi-k) de la ligne (Li) qui croise le bord vertical (K5) de la remorque (105).

6. Procédé selon l'une des revendications précédentes,
- la ligne (Li(t)) d'une image de caméra KB(t) à interpréter, qui croise le bord vertical (K5), étant définie à partir de la ligne (Li(t-1)) utilisée pour l'interprétation de l'image de caméra précédente (KB(t-1)) par décalage selon le vecteur de mouvement (BV1(t-1)) défini pour l'image de caméra précédente (KB(t-1)).

7. Procédé selon l'une des revendications précédentes, un système de 2x2 équations étant résolu pour l'actualisation d'un vecteur de mouvement (BVi(t-1)).

8. Procédé selon l'une des revendications précédentes, une matrice régularisée (MR) étant définie par addition d'une matrice de régularisation (Reg) à une matrice 2x2 (M) du système d'équations.

9. Procédé selon l'une des revendications précédentes, une matrice finale (MF) étant définie par multiplication de la matrice de régularisation (Reg) à une matrice de rotation (Rot).

10. Procédé selon l'une des revendications précédentes, l'indice de condition (K) de la matrice finale (MF) étant utilisé comme facteur de fiabilité (BVVi).

11. Procédé selon l'une des revendications précédentes, le procédé de recherche de vecteur de mouvement étant initialisé et/ou limité par les vecteurs de mouvement précédents (BVi(t-1)) et/ou par la connaissance préalable.

12. Unité de commande (110) pour le suivi d'une portion d'image (104a, 104b, KBA) d'une image de caméra (104, KB), représentée sur un moniteur (101) destiné à remplacer un rétroviseur extérieur (102) d'un véhicule (103), lors d'un virage d'un attelage (106) composé du véhicule (103) et d'une remorque (105), **caractérisé par** :
- une unité de définition de point de bord (25) au moyen de laquelle est défini en tant que point de bord (KP1, KP2, KP3) au moins un point (KP1, KP2, KP3) d'un bord vertical (K5) de la remorque (105) le long d'au moins une ligne (L1, L2, L3) qui croise ce bord (K5),
- une unité de définition de vecteur de mouvement (216) au moyen de laquelle un vecteur de mouvement (BV1, BV2, BV3) est défini pour ce point de bord (KP1, KP2, KP3),
- une unité de définition de facteur de fiabilité (217) au moyen de laquelle un facteur de fiabilité (BVV1, BVV2, BVV3) est défini pour le vecteur de mouvement (BV1, BV2, BV3),
- une unité d'évaluation de facteur de fiabilité (218) au moyen de laquelle il est défini si le facteur de fiabilité (BVV1, BVV2, BVV3) se trouve à l'intérieur d'une plage prédéfinie, et
- une unité de suivi de portion d'image (118) au moyen de laquelle la portion d'image (104a, 104b, KBA) est suivie conformément à la valeur (BV) du vecteur de mouvement (BV1, BV2, BV3) lorsque le facteur de fiabilité (BVV1, BVV2, BVV3) se trouve à l'intérieur de la plage prédéfinie.
